# EUROPEAN PATENT APPLICATION

(11) **EP 3 809 063 A1**
(43) Date of publication of application: **21.04.2021**
(21) Application number: 19823289.4
(22) Date of filing: 12.06.2019
(51) Int. Cl.: F25B 41/04, F16K 1/04, F16K 11/04, F16K 27/00, F24F 1/32

(54) **CLOSING VALVE AND METHOD FOR PRODUCING SAME**

(30) Priority: 18.06.2018 JP 2018115389
(71) Applicant: Daikin Industries, Ltd., Osaka 530-8323 (JP)
(72) Inventor: Yamashita, Honami, Osaka 530-8323 (JP); Ohnuma, Youichi, Osaka 530-8323 (JP)
(74) Representative: Global IP Europe Patentanwaltskanzlei
(86) International application number: PCT/JP2019/023317
(87) International publication number: WO 2019/244748

(57) **Abstract**

To provide a shutoff valve having a structure that can easily be manufactured at a low cost. A valve main body (55) includes a first part (56) and a second part (57). The first part (56) includes a first connection portion (56a) connected to a refrigerant pipe (12), which is a first refrigerant pipe. The second part (57) includes a valve body accommodating portion (57a) that accommodates a valve body (51) located at a second position. The first part (56) and the second part (57) are separate parts bonded to each other, and the first part (56) contains a part of a movement passage (53).

## Description

### TECHNICAL FIELD

The present invention relates to a shutoff valve for shutting off the flow of refrigerant, and a method of manufacturing the shutoff valve.

### BACKGROUND ART

Conventional heat source units include one through which refrigerant flows. The heat source unit applies heat energy to the refrigerant or deprives the refrigerant of the heat energy, whereby the heat source unit can supply the heated refrigerant or the cooled refrigerant to a utilization unit. Such a heat source unit is usually provided with a shutoff valve as described in, for example, Patent Literature 1 (JP 2013-242038 A). A valve body is disposed in the shutoff valve described in Patent Literature 1. The valve body is for opening and closing the shutoff valve to control, i.e., allow or stop the flow of refrigerant. The valve body moves to open or block a flow path inside the shutoff valve, making the shutoff valve opened or closed.

### SUMMARY OF THE INVENTION

### <Technical Problem>

The shutoff valve described in Patent Literature 1 is connected to a refrigerant pipe of a heat source unit, and also to a refrigerant pipe extending to a utilization unit. The shutoff valve of Patent Literature 1 is also fixed to a heat source unit such as an outdoor unit. The shutoff valve is required to have high precision and high strength for connection with the refrigerant pipe and for being fixed to the heat source unit. In order to satisfy such requirements, the shutoff valve described in Patent Literature 1 includes copper or a copper alloy. As described in Patent Literature 1, in order to manufacture, at a low cost, a shutoff valve having a complicated shape such as a portion connected to the refrigerant pipe of the heat source unit, a portion connected to the refrigerant pipe extending to the utilization unit, a portion accommodating the valve body, and a portion attached to the heat source unit, there has been conventionally adopted a manufacturing method of deforming a member containing copper or a copper alloy by forging to remove burrs.

However, it is difficult to significantly reduce the manufacturing cost merely by improving the manufacturing method that involves removing burrs after forging.

An object of the present invention is to provide a shutoff valve described above, having a structure that can easily be manufactured at a low cost.

### <Solution to Problem>

A shutoff valve according to a first aspect includes a flow path inside, the flow path allowing refrigerant to flow between a first refrigerant pipe extending to a utilization unit and a second refrigerant pipe of a heat source unit in a state where the shutoff valve is connected between the first refrigerant pipe and the second refrigerant pipe, the shutoff valve being configured to switch opening and closing of the flow path, the shutoff valve including: a valve body configured to move through a movement passage between a first position for closing the flow path and a second position for opening the flow path; a first part including a first connection portion connected to the first refrigerant pipe; and a second part including a valve body accommodating portion that accommodates the valve body located at the second position, wherein the first part and the second part are separate parts bonded to each other, and the first part contains a part of the movement passage.

In the shutoff valve having such a configuration, the first part contains a part of the movement passage of the valve body, and the first part can be bonded to the second part while being inserted into the second part. Therefore, for example, an inexpensive component obtained by making a hole along the center axis of a rod-shaped member, or a component obtained by processing a metal tubular member can be used for the first part; it is possible to provide a shutoff valve having a structure that can easily be manufactured at a low cost.

A shutoff valve according to a second aspect is the shutoff valve according to the first aspect, wherein the first part includes a part of the flow path inside, and a space to be closed by the valve body when the valve body is located at the first position is present inside the first part.

In the shutoff valve having such a configuration, the space to be closed by the valve body when the valve body is located at the first position is present inside the first part. Therefore, the movement passage of the valve body in the first part and the space closed by the valve body can be created in the first part, making it easy to manufacture a structure that can be closed sufficiently by the valve body.

A shutoff valve according to a third aspect is the shutoff valve according to the first or second aspect, wherein the first part has a cross section having a polygonal shape, an oval shape, or a shape obtained by cutting an oval or circular shape with a straight line, the cross section being perpendicular to a longitudinal direction of the first part.

In the shutoff valve having such a configuration, the cross section of the first part perpendicular to the longitudinal direction of the first part has a polygonal shape, an oval shape, or a shape obtained by cutting an oval or circular shape with a straight line. Therefore, the first part can be fixed so as not to rotate around the longitudinal axis of the first part when the first refrigerant pipe is connected to the first connection portion, making the bonding portion less likely to break.

A shutoff valve according to a fourth aspect is the shutoff valve according to any one of the first to third aspects, wherein the first part and the second part have a cut surface on an inner surface of the movement passage, the cut surface being generated by continuous cutting from a portion of the movement passage inside the second part to a portion of the movement passage inside the first part.

In the shutoff valve having such a configuration, the first part and the second part have a cut surface on an inner surface of the movement passage, the cut surface being generated by continuous cutting from a portion of the movement passage inside the second part to a portion of the movement passage inside the first part. Therefore, a step, which would be caused by the combination of the first part and the second part, is not generated on the inner surface of the movement passage. It is therefore possible to prevent the refrigerant leakage to the outside and insufficient closing of the shutoff valve, which would be caused when such a step is generated at the boundary between the first part and the second part inside the movement passage.

A shutoff valve according to a fifth aspect is the shutoff valve according to any one of the first to fourth aspects, wherein the first part includes a valve seat on which the valve body is seated when the valve body is at the first position.

In the shutoff valve having such a configuration, the first part includes the valve seat; therefore, for example, the movement passage of the valve body and the valve seat can be processed at the same time to easily obtain high dimensional accuracy for the movement passage and the valve seat. Therefore, it is easy to manufacture the shutoff valve in which the valve body and the valve seat can be in close contact with each other without a gap while the valve body is located at the first position and the valve body is seated on the valve seat.

A shutoff valve according to a sixth aspect is the shutoff valve according to any one of the first to fifth aspects, wherein the second part includes a support portion to be fixed to the heat source unit.

In the shutoff valve having such a configuration, the second part includes the support portion, and the valve body accommodating portion and the support portion are integrated as one component. This makes it easy to increase the strength of the portion ranging from the valve body accommodating portion to the support portion.

A shutoff valve according to a seventh aspect is the shutoff valve according to any one of the first to sixth aspects, wherein the valve body accommodating portion includes a material containing iron, and the first connection portion includes a material containing copper.

In the shutoff valve having such a configuration, iron is contained in the material constituting the valve body accommodating portion, while copper is contained in the material constituting the first connection portion. This makes it easy to increase the strength of the valve body accommodating portion and to process the first connection portion. As a result, it is possible to provide, at a low cost, a shutoff valve in which the refrigerant is less likely to leak from the valve body accommodating portion and from the first connection portion.

An eighth aspect is a method of manufacturing a shutoff valve including a flow path that allows refrigerant to flow between a first refrigerant pipe extending to a utilization unit and a second refrigerant pipe of a heat source unit in a state where the shutoff valve is connected between the first refrigerant pipe and the second refrigerant pipe, and a valve body configured to move through a movement passage between a first position for closing the flow path and a second position for opening the flow path, the method including: inserting a first part into a second part or inserting the second part into the first part, the first part including a first connection portion connected to the first refrigerant pipe, the second part including a valve body accommodating portion that accommodates the valve body located at the second position; bonding the first part and the second part; and forming an inner surface of the movement passage by continuous cutting from the second part to the first part.

With the method of manufacturing a shutoff valve having such a configuration, the first part contains a part of the movement passage of the valve body, and the first part can be bonded to the second part while being inserted into the second part. Therefore, for example, an inexpensive member obtained simply by making a hole along the center axis of a rod-shaped member can be used for the first part, and it is thus possible to make the first part with an inexpensive member and to manufacture, at a low cost, a shutoff valve with a reduced risk of refrigerant leakage.

### BRIEF DESCRIPTION OF THE DRAWINGS

FIG. 1 is a circuit diagram illustrating an exemplary air conditioner in which a shutoff valve according to an embodiment is used.
FIG. 2 is a perspective view illustrating an exemplary appearance of the air conditioner of FIG. 1.
FIG. 3 is an exploded perspective view illustrating a heat source unit of the air conditioner.
FIG. 4 is a perspective view of a shutoff valve mounting plate that is a part of a casing of the heat source unit.
FIG. 5 is a cross-sectional view of the shutoff valve.
FIG. 6 is a perspective view illustrating the appearance of a valve main body.
FIG. 7 is a cross-sectional view of the valve main body for explaining the position of a valve body when the shutoff valve is closed.
FIG. 8 is a cross-sectional view of the valve main body for explaining the position of the valve body when the shutoff valve is opened.
FIG. 9 is a cross-sectional view of the shutoff valve.
FIG. 10 is a flowchart illustrating an example of a shutoff valve manufacturing flow.
FIG. 11 is a cross-sectional view of a shutoff valve according to Modification 1A.
FIG. 12 is a cross-sectional view of a shutoff valve according to Modification 1C.
FIG. 13 is a cross-sectional view of a shutoff valve according to Modification 1D.

### DESCRIPTION OF EMBODIMENTS

### (1) Overall configuration

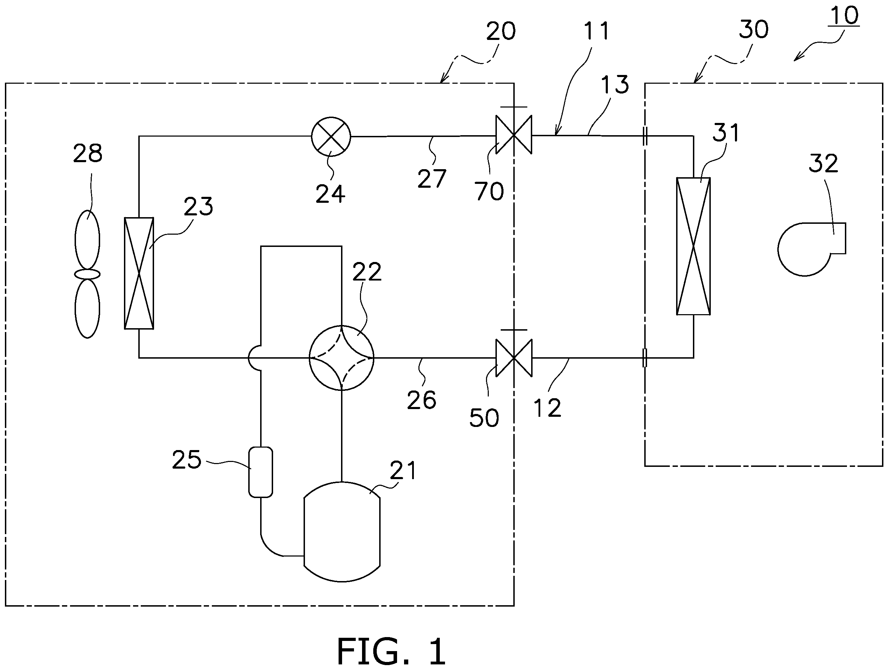

Shutoff valves 50 and 70 illustrated in FIG. 1 are installed in a heat source unit 20 of an air conditioner 10. As illustrated in FIG. 1, the air conditioner 10 includes a refrigerant circuit 11 in which a utilization unit 30 and the heat source unit 20 are connected by refrigerant pipes 12 and 13. A compressor 21, a four-way valve 22, a heat source-side heat exchanger 23, an expansion valve 24, an accumulator 25, and the shutoff valves 50 and 70 included in the heat source unit 20, and a utilization-side heat exchanger 31 included in the utilization unit 30 are connected to the refrigerant circuit 11. The air conditioner 10 is configured to perform a cooling operation and a heating operation selectively, through a vapor compression refrigeration cycle carried out in the refrigerant circuit 11. The four-way valve 22 is connected in a way illustrated by the solid lines in the cooling operation mode, and connected in a way illustrated by the broken lines in the heating operation mode. A refrigerant pipe 26 extending into the heat source unit 20 is connected to the shutoff valve 50. The refrigerant pipe 26 illustrated in FIG. 1 extends to the four-way valve 22. A refrigerant pipe 27 extending into the heat source unit 20 is connected to the shutoff valve 70. The refrigerant pipe 27 illustrated in FIG. 1 extends to the expansion valve 24.

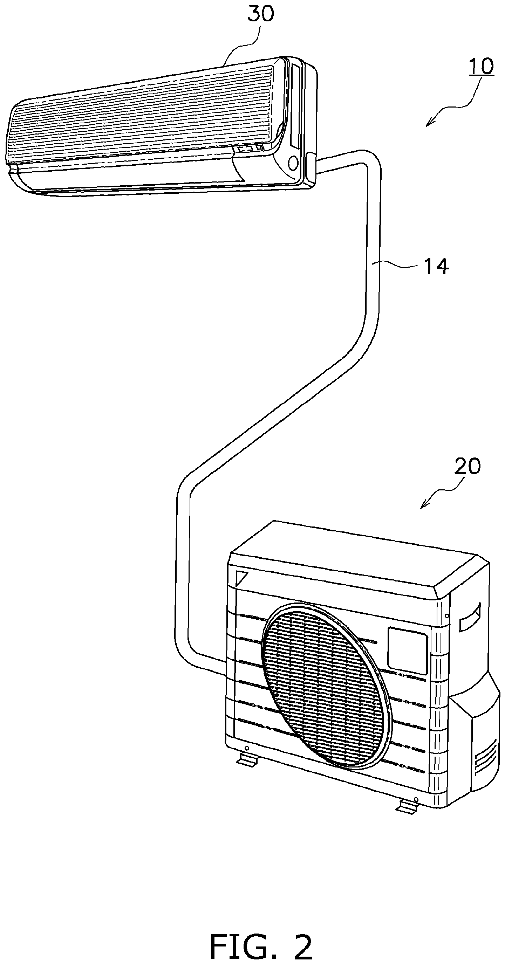

FIG. 2 illustrates an exemplary appearance of the air conditioner 10. In the air conditioner 10 illustrated in FIG. 2, for example, the utilization unit 30 is attached to a wall surface or the like in a room, while the heat source unit 20 is installed outdoors. A pipe member 14 connects the heat source unit 20 and the utilization unit 30. The refrigerant pipes 12 and 13 pass through the pipe member 14. In addition to the refrigerant pipes 12 and 13, for example, electric wires and signal lines (not illustrated) connected to the heat source unit 20 and the utilization unit 30 pass through the pipe member 14. The pipe member 14 also includes, for example, a heat insulating member and a decorative pipe cover that cover the outer parts of the refrigerant pipes 12 and 13.

When the cooling operation or the heating operation is performed, the shutoff valves 50 and 70 are open. Before the air conditioner 10 is installed in a building such as a house, refrigerant is transported while being confined in, for example, the heat source unit 20. For the refrigerant to be kept confined in the heat source unit 20 in this way, the shutoff valves 50 and 70 are closed. Then, after the utilization unit 30 and the heat source unit 20 are installed in the building, the refrigerant pipes 12 and 13 are connected to the heat source unit 20 and to the utilization unit 30. After the refrigerant circuit 11 is formed in the above manner, the shutoff valves 50 and 70 are opened. The shutoff valves 50 and 70 may also be opened and closed during maintenance of the air conditioner 10.

### (1-1) Circulation of refrigerant in cooling operation mode

During the cooling operation mode, gas refrigerant compressed by the compressor 21 is sent to the heat source-side heat exchanger 23 through the four-way valve 22. The refrigerant releases heat to air at the heat source-side heat exchanger 23, expands at the expansion valve 24 to be decompressed, and is sent to the utilization-side heat exchanger 31 through the shutoff valve 70 and the refrigerant pipe 13. The low-temperature, low-pressure refrigerant sent from the expansion valve 24 exchanges heat with the air at the utilization-side heat exchanger 31 to absorb heat from the air. The gas refrigerant or gas-liquid two-phase refrigerant that has undergone the heat exchange at the utilization-side heat exchanger 31 is sucked into the compressor 21 through the refrigerant pipe 12, the shutoff valve 50, the four-way valve 22, and the accumulator 25. The conditioned air, from which the heat has been absorbed at the utilization-side heat exchanger 31, is blown into the room from the utilization unit 30, for example, whereby the room is cooled.

### (1-2) Refrigerant circulation in heating operation mode

During the heating operation mode, the gas refrigerant compressed by the compressor 21 is sent to the utilization-side heat exchanger 31 through the four-way valve 22, the shutoff valve 50, and the refrigerant pipe 12. The refrigerant exchanges heat with air at the utilization-side heat exchanger 31 to apply heat to the air. The refrigerant that has undergone the heat exchange at the utilization-side heat exchanger 31 is sent to the expansion valve 24 through the refrigerant pipe 13 and the shutoff valve 70. The low-temperature, low-pressure refrigerant that has been expanded and decompressed by the expansion valve 24 is sent to the heat source-side heat exchanger 23, and exchanges heat with air at the heat source-side heat exchanger 23 to absorb heat from the air. The gas refrigerant or gas-liquid two-phase refrigerant that has undergone the heat exchange at the heat source-side heat exchanger 23 is sucked into the compressor 21 through the four-way valve 22 and the accumulator 25. The conditioned air, to which the heat has been applied at the utilization-side heat exchanger 31, is blown into the room from the utilization unit 30, for example, whereby the room is heated.

### (1-3) Air flow

The heat source unit 20 includes a heat source-side fan 28, and the utilization unit 30 includes a utilization-side fan 32. During the cooling operation mode and the heating operation mode, the heat source-side fan 28 supplies air to the heat source-side heat exchanger 23 in order to promote the heat exchange between the air and the refrigerant at the heat source-side heat exchanger 23. During the cooling operation mode and the heating operation mode, the utilization-side fan 32 supplies air to the utilization-side heat exchanger 31 in order to promote the heat exchange between the air and the refrigerant at the utilization-side heat exchanger 31.

### (2) Detailed configurations

### (2-1) Heat source unit 20

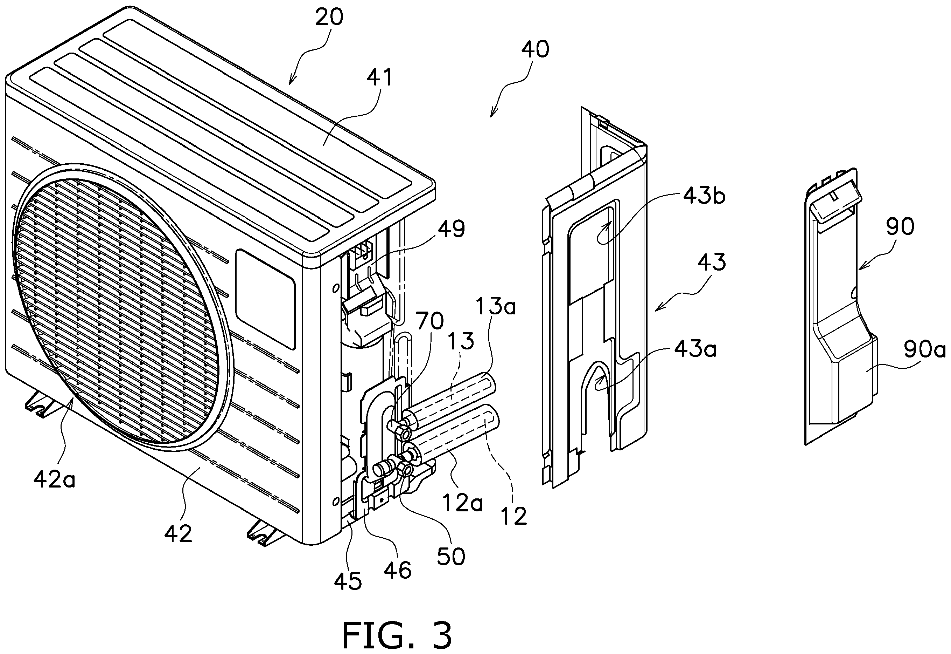

FIG. 3 illustrates the heat source unit 20 that has been disassembled with some parts thereof detached. The parts detached in FIG. 3 are a right-side panel 43 and a shutoff valve cover 90. The right-side panel 43 is a part of a casing 40.

### (2-1-1) Casing 40

The casing 40 is a hollow box and has six surfaces like a rectangular parallelepiped. That is, the members constituting the casing 40 are each disposed on any of a top surface, a front surface, a right side surface, a left side surface, a rear surface, and a bottom surface. In the casing 40, a top panel 41 is disposed on the top surface, a front panel 42 is disposed on the front surface, the right-side panel 43 is disposed on the right side surface and on a part of the rear surface, a left-side panel (not illustrated) is disposed on the left side surface, a wire mesh or a suction grille (not illustrated) is disposed on the rear surface other than the part where the right-side panel 43 is disposed, and a bottom plate 45 is disposed on the bottom surface. The top panel 41, the front panel 42, the right-side panel 43, the left-side panel, and the bottom plate 45 preferably include a metal member in order to enhance safety, and are formed of, for example, sheet metal. The compressor 21, the four-way valve 22, the heat source-side heat exchanger 23, the expansion valve 24, and the heat source-side fan 28 described above are housed in the casing 40.

An opening (not illustrated) through which air is blown out is formed in the front panel 42. The opening is, for example, circular, and a blow-out grille 42a is disposed in front of the opening. The air that enters from the rear surface of the casing 40 and passes through the heat source-side heat exchanger 23 is blown out toward the front of the heat source unit 20 through the blow-out grille 42a.

A shutoff valve mounting plate 46, on which the shutoff valves 50 and 70 are fixed, is attached to the bottom plate 45 with, for example, screws. The shutoff valve mounting plate 46 preferably includes a metal member in order to enhance safety, and is formed of, for example, sheet metal. The shutoff valve mounting plate 46 is disposed on the right side surface. More specifically, the shutoff valve mounting plate 46 is attached such that the shutoff valves 50 and 70 are located at an opening 43a in the right-side panel 43. In other words, the right-side panel 43 and the shutoff valve mounting plate 46 constitute the right side surface of the casing 40. That is, the shutoff valve mounting plate 46 constitutes a part of the casing 40. In addition, another opening 43b is formed above the opening 43a in the right-side panel 43. The opening 43b is formed at a place where a terminal board 49 disposed inside the casing 40 can be seen.

### (2-1-2) Shutoff valve cover 90

The shutoff valve cover 90 covers the shutoff valves 50 and 70. The shutoff valve cover 90 is attached to the right-side panel 43. The shutoff valve cover 90 is configured to cover the openings 43a and 43b while being attached to the right-side panel 43. The shutoff valves 50 and 70 protrude through the opening 43a of the casing 40. Therefore, a protrusion 90a bulging outward of the shutoff valve cover 90 is disposed near the shutoff valves 50 and 70 in order to avoid contact with the shutoff valves 50 and 70. An opening (not illustrated) for drawing out the refrigerant pipes 12 and 13 connected to the shutoff valves 50 and 70 is provided between the shutoff valve cover 90 and the right-side panel 43. Insulation tubes 12a and 13a are attached to the outer peripheries of the refrigerant pipes 12 and 13 illustrated in FIG. 3, respectively.

### (2-1-3) Shutoff valve mounting plate 46

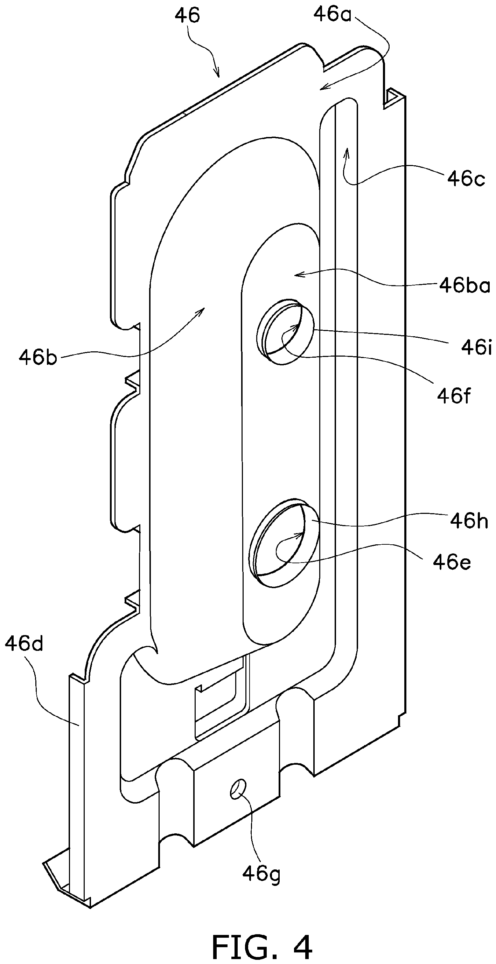

FIG. 4 illustrates the appearance of the shutoff valve mounting plate 46 as viewed from diagonally above the right front. The shutoff valve mounting plate 46 includes a flat portion 46a, a protrusion 46b, a recess 46c, and a rib 46d. The flat portion 46a is a flat plate-shaped portion extending along the vertical plane of the right-side panel 43 in a state where the shutoff valve mounting plate 46 is attached to the casing 40. At least a part of the flat portion 46a overlaps the right-side panel 43, whereby the opening 43a of the right-side panel 43 can be closed by the shutoff valve mounting plate 46 without an unnecessary gap.

The protrusion 46b bulges outward of the casing 40 relative to the flat portion 46a. A top portion 46ba of the protrusion 46b is flat. Two mounting openings 46e and 46f, to which the shutoff valves 50 and 70 are respectively attached, are formed in the flat top portion 46ba. The recess 46c is recessed inward of the casing 40 relative to the flat portion 46a. Such formation of the recess 46c forms convexoconcave on the shutoff valve mounting plate 46, improving the bending strength of the shutoff valve mounting plate 46. The rib 46d is formed by an end portion of the flat portion 46a being bent inward of the casing 40. The formation of such a rib 46d improves the bending strength of the shutoff valve mounting plate 46. A screw hole 46g is formed in a lower part of the shutoff valve mounting plate 46. A screw (not illustrated) inserted into the screw hole 46g is also inserted into a screw hole (not illustrated) in the bottom plate 45, whereby the shutoff valve mounting plate 46 is fastened to the bottom plate 45 with the screw.

The shutoff valve mounting plate 46 is preferably made of metal in order to improve safety. The shutoff valve mounting plate 46 includes, for example, a sheet metal member. Through pressing of the sheet metal member, for example, the shutoff valve mounting plate 46 having a complicated shape as described above is formed. The mounting openings 46e and 46f of the shutoff valve mounting plate 46 are respectively surrounded by ribs 46h and 46i rising from the flat portion 46a. The ribs 46h and 46i can also be formed at the same time as when, for example, the sheet metal member is shaped into the shutoff valve mounting plate 46 through pressing. The refrigerant pipes 26 and 27 are brazed and fixed inside the ribs 46h and 46i, for example. Therefore, the inner portions of the ribs 46h and 46i are clad with a brazing material. Then, valve main bodies 55 and 75, which will be described later, are brazed and fixed to the flat top portion 46ba around the ribs 46h and 46i, for example.

### (2-2) Detailed configuration of shutoff valve

### (2-2-1) Shutoff valve 50

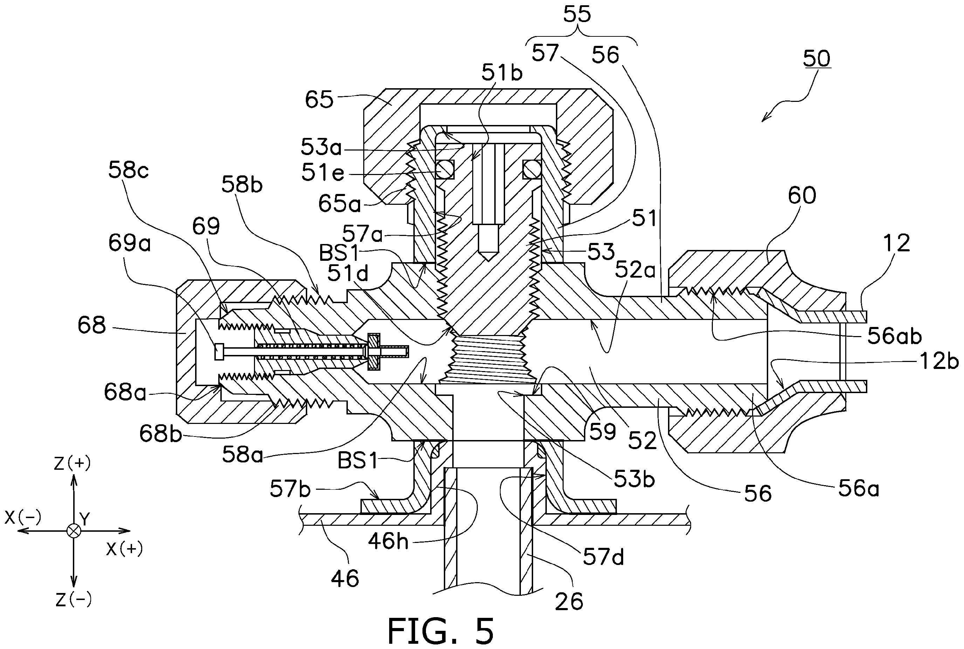

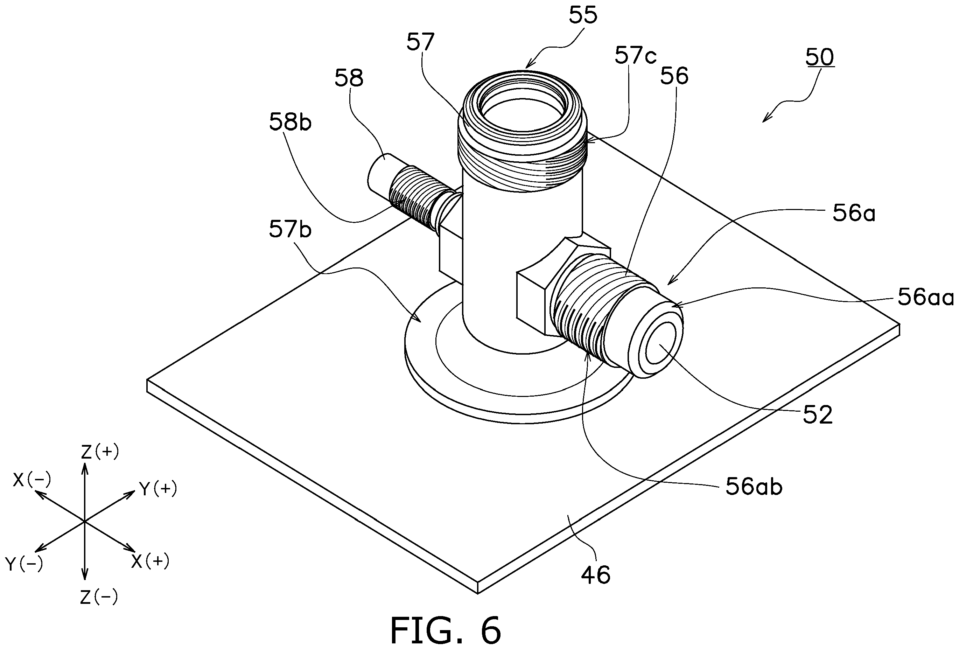

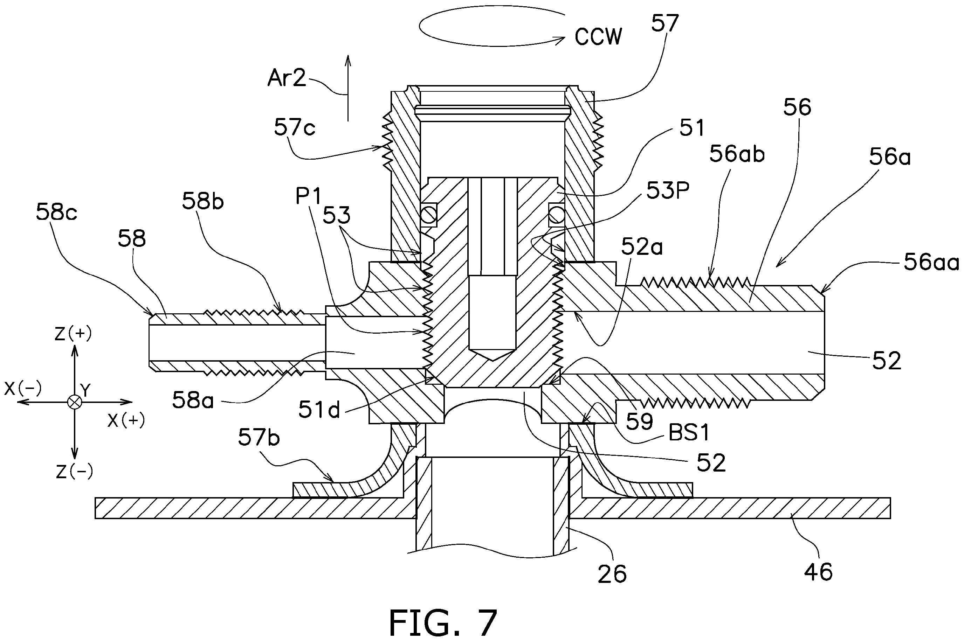

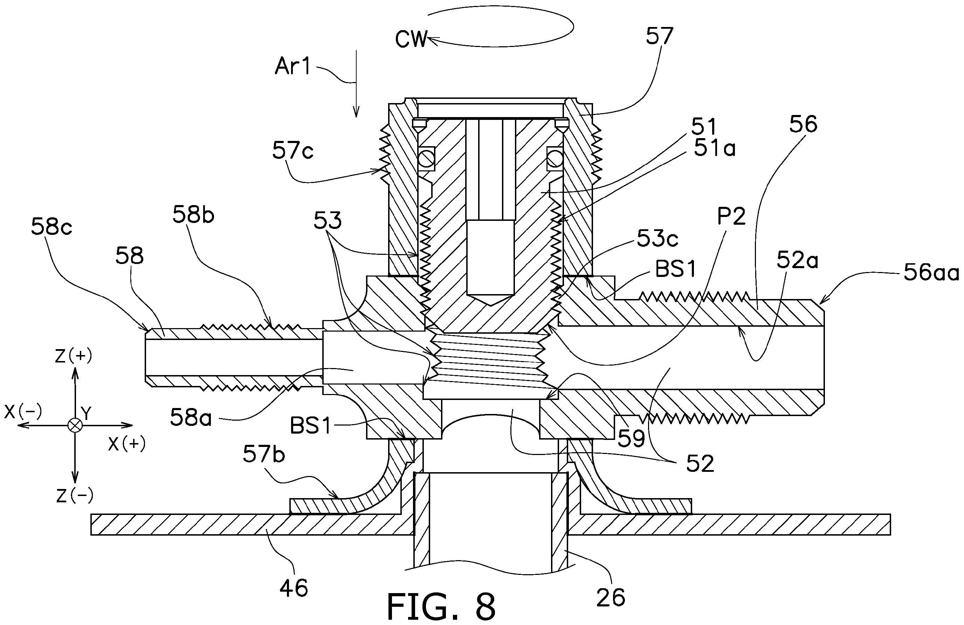

FIG. 5 illustrates a cross-sectional shape of the shutoff valve 50. FIG. 6 illustrates the appearance of the shutoff valve 50. FIGS. 7 and 8 are for explaining the movement of a valve body 51 in the shutoff valve 50. To explain the movement of the valve body 51, FIGS. 7 and 8 illustrate a simplified structure of the shutoff valve 50 as compared with FIG. 6. Among the coordinate axes illustrated in FIGS. 5 to 8, the plus direction of the Z axis (Z(+)) is the direction from the inside to the outside of the heat source unit 20, and conversely, the minus direction of the Z axis (Z(-)) is the direction from the outside to the inside of the heat source unit 20. Since the shutoff valve 50 is attached to the right side surface of the heat source unit 20, the Z axis is perpendicular to the right side surface. The plus direction of the X axis is the direction from the shutoff valve 50 toward the refrigerant pipe 12 and, in this case, the direction from the front to the back of the heat source unit 20. The plus direction of the Y axis is the direction from the bottom to the top of the heat source unit 20.

The shutoff valve 50 includes a flow path 52 inside. The flow path 52 allows the refrigerant to flow between the refrigerant pipe 12 extending to the utilization unit 30 and the refrigerant pipe 26 of the heat source unit 20 in a state where the shutoff valve 50 is connected between the refrigerant pipe 12 and the refrigerant pipe 26. The shutoff valve 50 switches the opening and closing of the flow path 52 by moving the valve body 51.

The valve body 51 is configured to move, through a movement passage 53, between a first position P1 (see FIG. 7) where the valve body 51 closes the flow path 52, and a second position P2 (see FIG. 8) where the valve body 51 opens the flow path 52. The movement passage 53 is threaded. A part of the valve body 51 is threaded with a male thread 51a (see FIG. 8). When the valve body 51 is rotated clockwise CW, the valve body 51 advances in the direction from the second position P2 toward the first position P1 (direction of the arrow Ar1). When the valve body 51 is rotated counterclockwise CCW, on the other hand, the valve body 51 advances in the direction from the first position P1 toward the second position P2 (direction of the arrow Ar2).

The flow path 52 is formed inside the valve main body 55. The valve main body 55 includes a first part 56 and a second part 57. The first part 56 and the second part 57 are separate from each other. The first part 56 and the second part 57 are integrated through brazing of a bonding surface BS1 between the first part 56 and the second part 57.

The first part 56 includes a first connection portion 56a to be connected to the refrigerant pipe 12 extending to the utilization unit 30. A tip portion 12b of the refrigerant pipe 12 is flared. Therefore, the inner diameter of the tip portion 12b of the refrigerant pipe 12 increases toward the tip. A taper 56aa is provided at the tip portion of the first connection portion 56a of the first part 56 so as to match the shape of the tip portion 12b of the refrigerant pipe 12. The refrigerant pipe 12 is fastened to the first connection portion 56a with a flare nut 60. Therefore, a male thread 56ab to be engaged with the flare nut 60 is provided in a part of the first connection portion 56a.

The connection portion between the refrigerant pipe 12 and the first connection portion 56a of the first part 56 entails a risk of refrigerant leakage due to, for example, a gap between the refrigerant pipe 12 and the first connection portion 56a. Therefore, in order to prevent the refrigerant leakage at the connection point between the refrigerant pipe 12 and the first connection portion 56a of the first part 56, it is preferable that the first connection portion 56a be processed with high dimensional accuracy. In order to facilitate processing of the first connection portion 56a with high dimensional accuracy, the first part 56 includes metal containing copper (Cu). Examples of the metal containing copper, which is a material of the first part 56, include brass. Examples of brass, which is a material of the first part 56, include C3604 (free-cutting brass) and C3771 (forging brass) specified in JIS H3250.

The first part 56 can easily be formed, for example, through cutting of a hexagonal columnar brass member. In the cutting of the brass member, for example, a through hole is drilled in the center of the hexagonal columnar brass member to form the flow path 52 and a suction path 58a. The flow path 52 and the suction path 58a, which extend along the X axis, each have a circular cross section. The inner diameter of a portion, into which a valve core 69 for forming the service port is inserted, is smaller than the inner diameter of the flow path 52. The surface of the first part 56 is shaped through cutting, which includes, for example, cutting the male threads 56ab and 58b, the tapers 56aa and 58c, and the like from the surface of the brass member with a lathe. As a result, the first part 56 made of brass can be obtained. The reason why the hexagonal part is left in the first part 56 is because this hexagonal part is used as a detent at the time of attaching the refrigerant pipe 12 to the first part 56 with the flare nut 60.

The second part 57 includes a valve body accommodating portion 57a that accommodates the valve body 51 located at the second position P2. The valve body accommodating portion 57a ranges from the boundary between the movement passage 53 and an outer portion 52a of the flow path 52 to one end portion 53a of the movement passage 53 in the first part 56. The outer portion 52a of the flow path 52 is an inner peripheral wall of the flow path 52 located far from the heat source unit 20 in the X-axis direction. The direction away from the heat source unit 20 is the plus direction of the Z axis.

As illustrated in FIG. 8, when the valve body 51 moves to the second position P2 and almost the entire valve body 51 is accommodated in the valve body accommodating portion 57a, the flow path 52 is opened, allowing the refrigerant to flow between the refrigerant pipe 12 and the refrigerant pipe 26. When the valve body 51 is at the second position P2, an O-ring 51e of the valve body 51 seals the gap between the inner peripheral surface of the movement passage 53 and the valve body 51. The sealing by the O-ring 51e fitted to the outer peripheral surface of the valve body 51 makes it possible to prevent the refrigerant from leaking from the gap between the inner peripheral surface of the movement passage 53 and the valve body 51 through the opening at the one end portion 53a of the movement passage 53.

In a situation where the valve body 51 is not moved, a valve lid 65 is attached to the second part 57 to block the movement passage 53. A male thread 57c, which is engaged with a female thread 65a cut on the inner side of the valve lid 65, is cut on a part of the outer peripheral surface of the second part 57. The valve lid 65 is screwed onto the second part 57 to protect the valve body 51.

A female thread 53c (see FIG. 8) is cut on the movement passage 53 in the valve body accommodating portion 57a near the outer portion 52a of the flow path 52. The male thread 51a cut on the valve body 51 corresponds to the female thread 53c in the valve body accommodating portion 57a. A hole 51b having a hexagonal cross section is provided in an upper part of the valve body 51. For example, inserting a hexagon wrench into the hole 51b and rotating the valve body 51 makes it possible to move the valve body 51 in the movement passage 53. When the valve body 51 is rotated clockwise CW from the state where the flow path 52 is opened as in FIG. 8, the valve body 51 is moved toward the heat source unit 20 (toward the shutoff valve mounting plate 46) through the movement passage 53. As a result, the flow path 52 can be closed as illustrated in FIG. 7. When the flow path 52 is closed, a tapered portion 51d at the tip of the valve body 51 comes into contact with the flow path 52 without a gap at the other end 53b of the movement passage 53. The inner diameter of the flow path 52 is reduced at the other end 53b of the movement passage 53 such that the tapered portion 51d can come into contact with the flow path 52 without a gap at the other end 53b of the movement passage 53. The place where the inner diameter of the flow path 52 is reduced is a valve seat 59 on which the valve body 51 is seated. The valve seat 59 has a ring shape, and the center of the ring substantially matches the center axis of the movement passage 53. Here, "substantially match" means that the center and the center axis match within a range of the manufacturing error. In order to allow the tapered portion 51d to come into contact with the flow path 52 without a gap at the other end 53b of the movement passage 53, the center axis of the movement passage 53 having a circular cross section preferably matches the center axis of the flow path 52 having a circular cross section. If the center axis of the movement passage 53 does not match the center axis of the flow path 52 along the Z axis, the tapered portion 51d does not fully contact the valve seat 59, and the refrigerant is not blocked sufficiently.

The second part 57 includes a support portion 57b. The support portion 57b is fixed to the heat source unit 20. Here, the shutoff valve mounting plate 46 constitutes a part of the casing 40 of the heat source unit 20. Therefore, the portion fixed to the shutoff valve mounting plate 46 is the support portion 57b. The second part 57 also includes a fitting portion 57d. The rib 46h of the shutoff valve mounting plate 46 is fitted to the fitting portion 57d.

The support portion 57b is brazed to the shutoff valve mounting plate 46. From the viewpoint of reducing the number of manufacturing steps, the brazing of the support portion 57b to the shutoff valve mounting plate 46 is preferably performed, in a furnace, together with the brazing of the bonding surface BS1 between the first part 56 and the second part 57. The O-ring 51e is attached to the valve body 51; therefore, the valve body 51 is attached to the valve main body 55 after the brazing of the support portion 57b to the shutoff valve mounting plate 46 and the brazing of the bonding surface BS1 between the first part 56 and the second part 57 are finished. Alternatively, the brazing of the support portion 57b to the shutoff valve mounting plate 46 and the brazing of the bonding surface BS1 between the first part 56 and the second part 57 may be performed separately.

The second part 57 includes the support portion 57b and the bonding surface BS1 with the first part 56. In order to move the valve body 51, therefore, the second part 57 is required to have sufficient strength to withstand the stress generated, for example, when the refrigerant pipe 12 is connected to the first part 56. Like the first part 56, in the case of manufacturing the second part 57 using metal containing copper (Cu), for example, brass, it is difficult to obtain sufficient strength of the second part 57 unless the wall of the second part 57 is made thick. Therefore, in the case where the second part 57 is manufactured using brass, the second part 57 tends to be heavy, and the price thereof tends to be high due to a large amount of materials used. Therefore, the second part 57 includes metal containing iron (Fe), which is easily made stronger than the metal containing copper. Examples of the metal containing iron include stainless steel. Since the heat source unit 20 is often installed outdoors, it is preferable to use stainless steel, which does not easily rust. Therefore, the strength of a second material constituting the second part 57 is greater than the strength of a first material constituting the first part 56. The strengths of these materials are compared by a tensile test conforming to the JIS Standard Z2241 (2011) (a No. 11 test piece is used for the cylindrical shape).

The second part 57 can be easily formed, for example, through processing of a cylindrical stainless steel member. For example, an end portion of the cylindrical stainless steel member is expanded by forging or bulging to form the support portion 57b. After that, for example, by cutting, a hexagonal hole is made in the central portion of the cylindrical stainless steel member to form the bonding surface BS1. Furthermore, in order to improve the dimensional accuracy of the support portion 57b, for example, the support portion 57b may be cut after the forging. Then, the male thread 57c and the female thread 53c are cut on the outer peripheral surface of the cylindrical stainless steel member. As a result, the second part 57 is obtained.

A service port part 58 is a port for filling the heat source unit 20 with the refrigerant. The suction path 58a is inside the service port part 58 and extends along the X axis (extends in the front-rear direction of the heat source unit 20). The suction path 58a is connected to the flow path 52. The valve core 69 is installed in the suction path 58a of the service port part 58 so as to block the suction path 58a. The valve core 69 has a built-in opening and closing pin 69a. When the pin 69a is pushed in the plus direction of the X axis, the pin 69a moves toward the flow path 52 to open a flow passage in the valve core 69. For example, when the hose of a vacuum pump (not illustrated) is connected to the service port part 58, the pin 69a is pushed by the hose to form a flow passage from the suction path 58a to the vacuum pump. When the vacuum pump connected in this way is driven, the air inside the refrigerant pipes 12 and 13 and the utilization-side heat exchanger 31 can be evacuated.

During normal use of the heat source unit 20 when the service port is not used, a cap 68 is attached to the service port part 58 to block the suction path 58a. A male thread 58b, which is engaged with a female thread 68b cut on the inner side of the cap 68, is cut on a part of the outer peripheral surface of the service port part 58. The cap 68 seals the service port part 58 while coming in direct contact with the service port part 58 at the location indicated by reference numeral 68a. In other words, the cap 68 is in close contact with the taper 58c of the service port part 58.

Even when air is sufficiently evacuated from the refrigerant pipe 12, the outside air may enter through a gap generated between the service port part 58 and the hose, in which case the degree of vacuum may not improve. When the refrigerant pipe 12 is filled with refrigerant, the refrigerant may leak through the gap. Accordingly, in order to prevent the air intrusion and refrigerant leakage through the connection point between the hose and the service port part 58, it is preferable that the service port part 58 be processed with high dimensional accuracy. In order to facilitate the processing of the service port part 58 with high dimensional accuracy, the service port part 58 includes metal containing copper (Cu). Examples of the metal containing copper, which is a material of the service port part 58, include brass. Examples of brass, which is a material of the service port part 58, include C3604 and C3771 specified in JIS H3250.

### (2-2-2) Shutoff valve 70

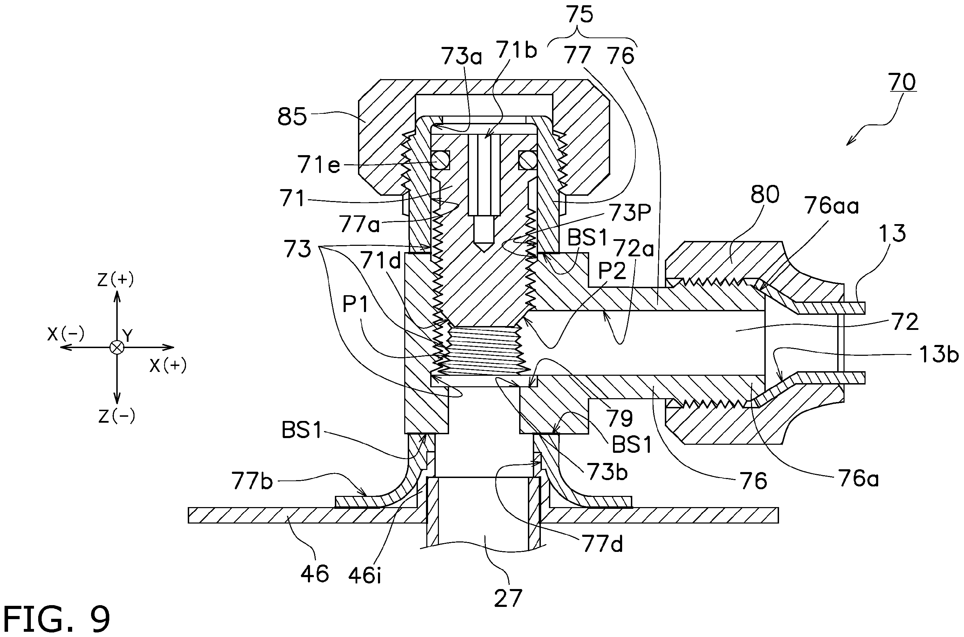

As illustrated in FIG. 9, like the shutoff valve 50, the shutoff valve 70 includes the valve main body 75 including a plurality of brazed components. Unlike the shutoff valve 50, the shutoff valve 70 does not have a service port. Except for the portion corresponding to the service port part 58, however, the shutoff valve 70 has a configuration corresponding to that of the shutoff valve 50. Therefore, here, the explanation of the shutoff valve 70 will be partially omitted by way of explaining the correspondence between the components of the shutoff valve 70 and those of the shutoff valve 50.

The shutoff valve 70 includes a valve body 71, an O-ring 71 e, a flow path 72, a movement passage 73, the valve main body 75, a first part 76, a first connection portion 76a, a second part 77, a valve body accommodating portion 77a, a support portion 77b, a fitting portion 77d, and a valve lid 85, which respectively correspond to the valve body 51, the O-ring 51e, the flow path 52, the movement passage 53, the valve main body 55, the first part 56, the first connection portion 56a, the second part 57, the valve body accommodating portion 57a, the support portion 57b, the fitting portion 57d, and the valve lid 65 of the shutoff valve 50.

The shutoff valve 70 includes the flow path 72 inside. The flow path 72 allows the refrigerant to flow between the refrigerant pipe 13 extending to the utilization unit 30 and the refrigerant pipe 27 of the heat source unit 20 in a state where the shutoff valve 70 is connected between the refrigerant pipe 13 and the refrigerant pipe 27. The shutoff valve 70 also switches the opening and closing of the flow path 72 by moving the valve body 71. For that purpose, the valve body 71 is configured to move, through the movement passage 73, between a first position P1 where the valve body 71 closes the flow path 72, and a second position P2 where the valve body 71 opens the flow path 72. Threads are cut on parts of the movement passage 73 and the valve body 71. When the valve body 71 is rotated clockwise, the valve body 71 advances in the direction from the second position P2 toward the first position P1. When the valve body 71 is rotated counterclockwise, on the other hand, the valve body 71 advances in the direction from the first position P1 toward the second position P2.

The flow path 72 is formed inside the valve main body 75. The valve main body 75 includes the first part 76 and the second part 77. The first part 76 and the second part 77 are separate from each other. The first part 76 and the second part 77 are integrated through brazing of a bonding surface BS1 between the first part 76 and the second part 77.

The first part 76 includes the first connection portion 76a to be connected to the refrigerant pipe 13 extending to the utilization unit 30. A tip portion 13b of the refrigerant pipe 13 is flared. A taper 76aa is provided at the tip portion of the first connection portion 76a of the first part 76 so as to match the shape of the tip portion 13b of the refrigerant pipe 13. The refrigerant pipe 13 is fastened to the first connection portion 76a with a flare nut 80.

Like the shutoff valve 50, in order to facilitate processing of the first connection portion 76a with high dimensional accuracy, the first part 76 of the shutoff valve 70 also includes metal containing copper (Cu). Examples of the metal containing copper, which is a material of the first part 56, include brass and, more specifically, C3604 or C3771 specified in JIS H3250. Like the first part 56, the first part 76 can easily be formed, for example, through cutting of a hexagonal columnar brass member.

The second part 77 includes the valve body accommodating portion 77a that accommodates the valve body 71 located at the second position P2. The valve body accommodating portion 77a ranges from the boundary between the movement passage 73 and an outer portion 72a of the flow path 72 to one end portion 73a of the movement passage 73 in the first part 76. When the valve body 71 is at the second position P2, the O-ring 71e of the valve body 71 seals the gap between the inner peripheral surface of the movement passage 73 and the valve body 71. In a situation where the valve body 71 is not moved, the valve lid 85 is attached to the second part 77 to block the movement passage 73. A hole 71b having a hexagonal cross section is provided in an upper part of the valve body 71. For example, inserting a hexagon wrench into the hole 71b and rotating the valve body 71 makes it possible to move the valve body 71 in the movement passage 73.

When the flow path 72 is closed, a tapered portion 71d at the tip of the valve body 71 comes into contact with the flow path 72 without a gap at the other end 73b of the movement passage 73. The inner diameter of the flow path 72 extending along the Z axis is reduced at the other end 73b of the movement passage 73 such that the tapered portion 71d can come into contact with the flow path 72 without a gap at the other end 73b of the movement passage 73. The place where the inner diameter of the flow path 72 is reduced is a valve seat 79 on which the valve body 71 is seated. The valve seat 79 has a ring shape, and the center of the ring substantially matches the center axis of the movement passage 73. In order to allow the tapered portion 71d to come into contact with the flow path 72 without a gap at the other end 73b of the movement passage 73, the center axis of the movement passage 73 having a circular cross section preferably matches the center axis of the flow path 72 having a circular cross section. If the center axis of the movement passage 73 does not match the center axis of the flow path 72, the tapered portion 71d does not fully contact the valve seat 79, and the refrigerant is not blocked sufficiently.

The second part 77 includes the support portion 77b. The support portion 77b is fixed to the heat source unit 20. The second part 77 also includes the fitting portion 77d. The rib 46i of the shutoff valve mounting plate 46 is fitted to the fitting portion 77d. The support portion 77b is brazed to the shutoff valve mounting plate 46. From the viewpoint of reducing the number of manufacturing steps, the brazing of the support portion 77b to the shutoff valve mounting plate 46 is preferably performed, in a furnace, together with the brazing of the bonding surface BS1 between the first part 76 and the second part 77.

The second part 77 includes the support portion 77b and the bonding surface BS1 with the first part 76. In order to move the valve body 71, therefore, the second part 77 is required to have sufficient strength to withstand the stress generated, for example, when the refrigerant pipe 13 is connected to the first part 76. Therefore, the second part 77 includes metal containing iron (Fe), which is easily made stronger than the metal containing copper. Examples of the metal containing iron include stainless steel. Since the heat source unit 20 is often installed outdoors, it is preferable to use stainless steel, which does not easily rust.

The second part 77 can be easily formed, for example, through processing of a cylindrical stainless steel member. For example, an end portion of the cylindrical stainless steel member is expanded by forging or bulging to form the support portion 77b. After that, for example, by cutting, a hexagonal hole is made in the central portion of the cylindrical stainless steel member to form the bonding surface BS1. In order to improve the dimensional accuracy of the support portion 77b, for example, the support portion 77b may be cut after the forging.

### (2-2-3) Manufacturing steps for shutoff valves 50 and 70

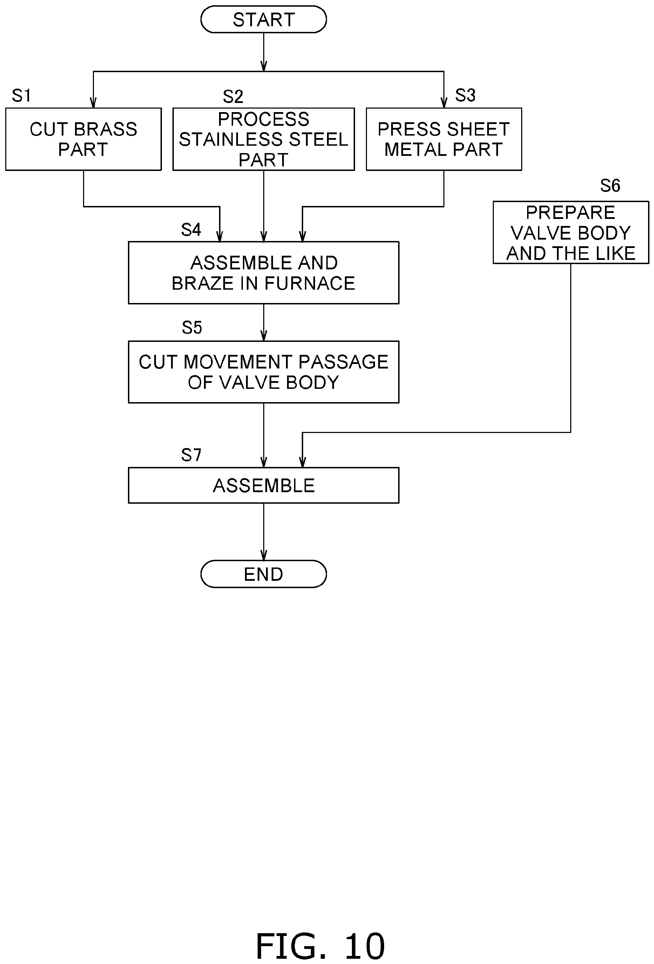

Although already described, an exemplary flow of the manufacturing steps for the shutoff valves 50 and 70 will be described with reference to FIG. 10. The cutting of the first parts 56 and 76, which are brass parts (step S1), the processing of the second parts 57 and 77, which are stainless steel parts (step S2), and the pressing of the shutoff valve mounting plate 46, which is a sheet metal component (step S3), may proceed either in parallel or sequentially, for example.

The first parts 56 and 76 are cut from, for example, a hexagonal columnar brass rod through cutting. The second parts 57 and 77 are obtained, for example, through processing of a cylindrical stainless steel pipe. Examples of the method used for processing the stainless steel pipe include forging, pressing, bulging, and cutting. The shutoff valve mounting plate 46 is obtained, for example, through pressing of one sheet metal.

The first parts 56 and 76, the second parts 57 and 77, the shutoff valve mounting plate 46, and the refrigerant pipes 26 and 27 are assembled and brazed together in a furnace (step S4). For example, the portions to be brazed of the assembled components are clad with a brazing material in advance, before the assembling. In other words, at the time when the brazing in the furnace is started, the bonding surfaces BS1 between the first parts 56 and 76 and the second parts 57 and 77, the boundary surface between the support portion 57b and the shutoff valve mounting plate 46, and the boundary surfaces between the ribs 46h and 46i and the refrigerant pipes 26 and 27 are already clad with the brazing material.

After the brazing is finished and the positional relationship between the first parts 56 and 76 and the second parts 57 and 77 is fixed, the movement passages 53 and 73 of the valve bodies 1 are formed by cutting (step S5). As a result, the valve main bodies 55 and 75 have cut surfaces 53P and 73P on the inner surfaces of the movement passages 53 and 73. The cut surfaces 53P and 73P are generated by continuous cutting from portions of the movement passages 53 and 73 inside the second parts 57 and 77 to portions of the movement passages 53 and 73 inside the first parts 56 and 76.

For example, the valve bodies 51 and 71, the valve lids 65 and 85, the cap 68, and the valve core 69 are prepared in a manner similar to the conventional method (step S6). The valve bodies 51 and 71 are incorporated into the assembled body, in which the valve main bodies 55 and 75 and the refrigerant pipes 26 and 27 are fixed to the shutoff valve mounting plate 46 through the brazing in step S4. Then, the ends of the second parts 57 and 77 are crimped such that the valve bodies 51 and 71 cannot be pulled out. After that, the valve core 69 is inserted into the assembled body, and the valve lids 65 and 85 and the cap 68 are screwed onto the assembled body. As a result, the assembled body can be obtained, in which the shutoff valve mounting plate 46, the shutoff valves 50 and 70, and the refrigerant pipes 26 and 27 are integrated (step S7).

### (3) Modifications

### (3-1) Modification 1A

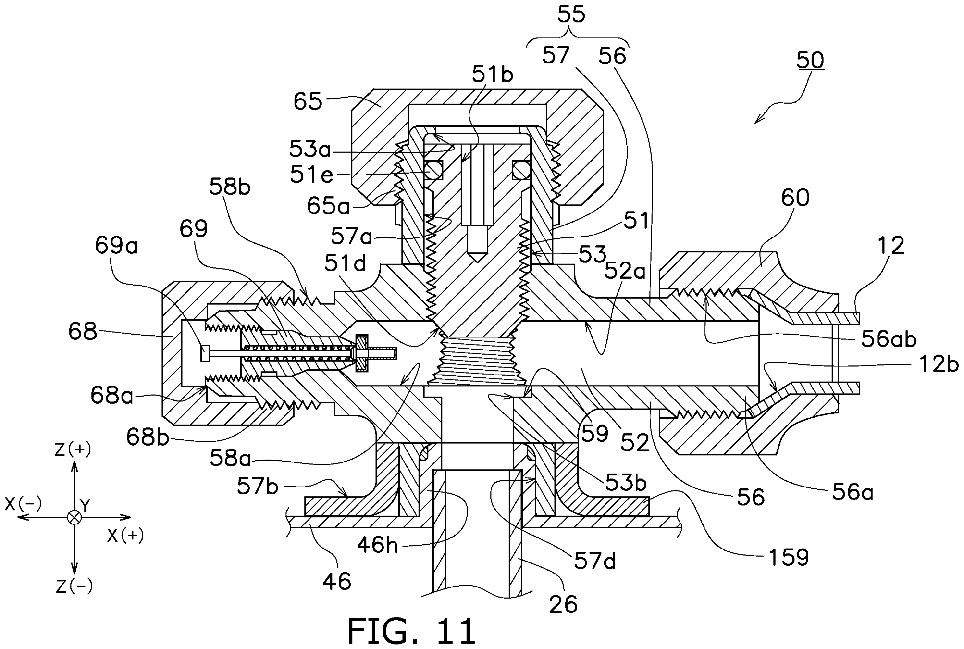

In the above embodiment, the second part 57 includes the support portion 57b. Alternatively, as illustrated in FIG. 11, the second part 57 of the above embodiment may be replaced with a second part 157 combined with a third part 159 different from the second part 157. The third part 159 includes a support portion 57b. The second part 57 and the second part 157 are different only in whether the support portion 57b is integrated or a separate member. In the shutoff valve 50 illustrated in FIG. 11, the components having the same reference numerals as those in the above embodiment are the same components in the shutoff valve 50 of the above embodiment.

The inner diameter of the third part 159 in FIG. 11 substantially matches the outer diameter of the second part 157. That is, fitting and bonding the third part 159 to the second part 157 makes it possible to obtain a component having the same function as the second part 57 of the above embodiment. Forming the support portion 57b as the third part 159 simplifies the configuration of the second part 157 and facilitates the formation of the second part 157. The second part 157 and the third part 159 may be coupled by brazing, for example.

### (3-2) Modification 1B

In the above embodiment, the outer peripheries of the first parts 56 and 76 are hexagonal, for example. The hexagonal shape plays a role of a detent that prevents the first parts 56 and 76 from rotating with respect to the second parts 57, 77, and 157 due to the fastening torque generated when the refrigerant pipes 12 and 13 are fastened to the first parts 56 and 76 with the flare nuts 60 and 80. If the outer peripheries of the first parts 56 and 76 are circular, the fastening torque may be applied to the bonding portions (bonding surfaces BS1) of the first parts 56 and 76, which may in turn break the bonding portions. For example, in the case where the outer peripheries of the first parts 56 and 76 are hexagonal, the fastening torque can be received by the second parts 57, 77, and 157, and the bonding portions (bonding surfaces BS1) are less likely to break. The shape that acts as such a detent is not limited to a hexagon, but may be another polygon. Alternatively, the shape that acts as a detent may be an oval shape, or a shape obtained by cutting an oval or circular shape with a straight line. Examples of the oval shape include at least an ellipse, an oblong, and an egg shape. Examples of the shape obtained by cutting an oval or circular shape with a straight line include a semicircle, that is, a straight line combined with a curve.

### (3-3) Modification 1C

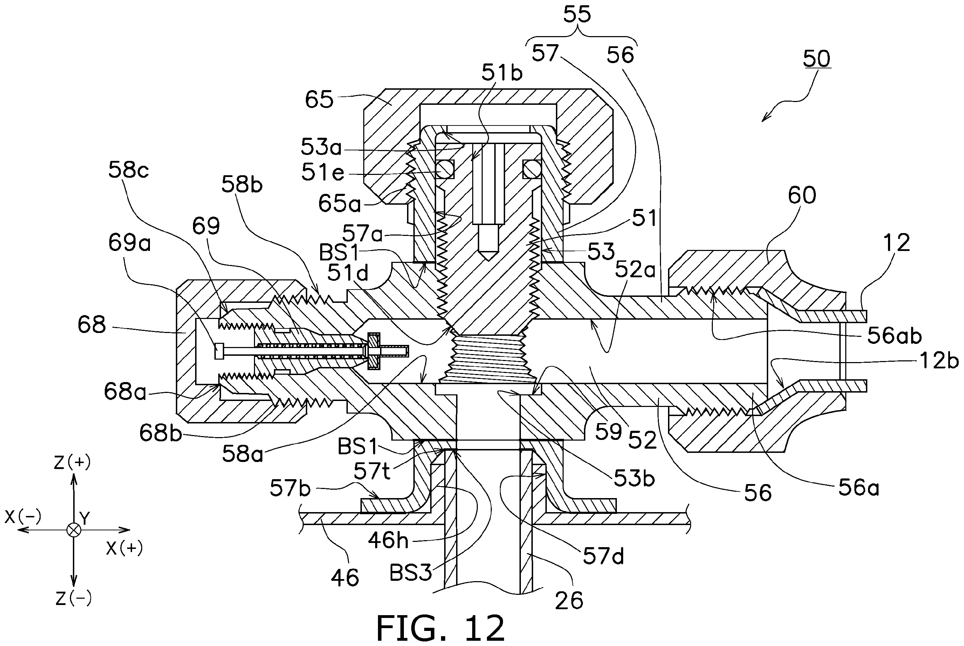

In the above embodiment, the refrigerant pipes 26 and 27 are brazed to the shutoff valve mounting plate 46. Alternatively, the refrigerant pipes 26 and 27 may be directly bonded to the second parts 57, 77, and 157 of the valve main bodies 55 and 75. The refrigerant pipes 26 and 27 and the second parts 57, 77, and 157 are bonded by, for example, brazing. FIG. 12 illustrates the refrigerant pipe 26 bonded, at a bonding surface BS3, to a tapered portion 57t in the fitting portion 57d of the second part 57. In such a case, for example, the shutoff valve mounting plate 46 may be brazed to the second parts 57, 77, and 157 after the refrigerant pipes 26 and 27 are bonded to the second parts 57, 77, and 157. Alternatively, through the brazing in a furnace, the shutoff valve mounting plate 46 and the second parts 57, 77, and 157 may be bonded at the same time as when the refrigerant pipes 26 and 27 and the second parts 57, 77, and 157 are bonded. In the configuration in which the refrigerant pipes 26 and 27 are directly bonded to the second parts 57, 77, and 157 of the valve main bodies 55 and 75, the refrigerant leakage is less likely to occur.

### (3-4) Modification 1D

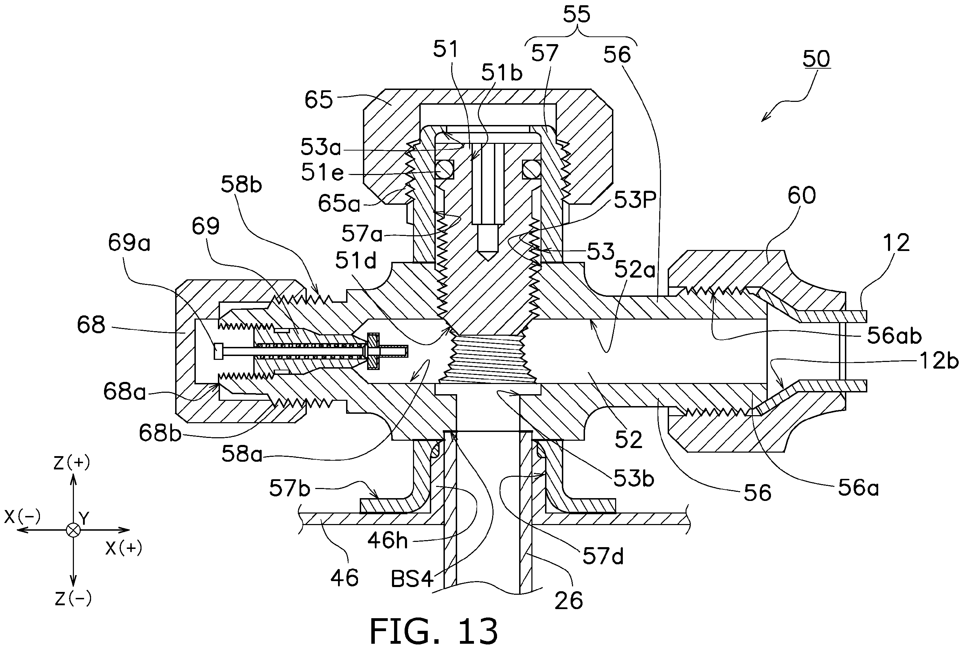

In Modification 1C described above, the refrigerant pipes 26 and 27 are directly bonded to the second parts 57, 77, and 157 of the valve main bodies 55 and 75. Alternatively, the refrigerant pipes 26 and 27 may be directly bonded to the first parts 56 and 76 of the valve main bodies 55 and 75. The refrigerant pipes 26 and 27 and the first parts 56 and 76 are bonded by, for example, brazing. FIG. 13 illustrates the refrigerant pipe 26 bonded to the first part 56 at a bonding surface BS4. In such a case, for example, the shutoff valve mounting plate 46 may be brazed to the first parts 56 and 76 after the refrigerant pipes 26 and 27 are bonded to the first parts 56 and 76. Alternatively, through the brazing in a furnace, the shutoff valve mounting plate 46 and the first parts 56 and 76 may be bonded at the same time as when the refrigerant pipes 26 and 27 and the first parts 56 and 76 are bonded. In the configuration in which the refrigerant pipes 26 and 27 are directly bonded to the valve main bodies 55 and 75, the refrigerant leakage is less likely to occur. In the configuration in which the refrigerant pipes 26 and 27 are directly bonded to the first parts 56 and 76 of the valve main bodies 55 and 75, the refrigerant leakage is less likely to occur. Especially in a case where the refrigerant pipes 26 and 27 are copper pipes, the problem of electrolytic corrosion is less likely to occur if the refrigerant pipes 26 and 27 are bonded to the first parts 56 and 76 containing copper.

### (4) Characteristics

### (4-1)

The shutoff valves 50 and 70 described above respectively include the flow paths 52 and 72 that allow the refrigerant to flow between the refrigerant pipes 12 and 13, which are first refrigerant pipes extending to the utilization unit 30, and the refrigerant pipes 26 and 27, which are second refrigerant pipes of the heat source unit 20, in a state where the shutoff valves 50 and 70 are connected between the refrigerant pipes 12 and 13 and the refrigerant pipes 26 and 27. The shutoff valves 50 and 70 are configured to switch the opening and closing of the flow paths 52 and 72, respectively. In such shutoff valves 50 and 70, as illustrated in FIGS. 5 and 9, for example, the first parts 56 and 76 contain parts of the movement passages 53 and 73 of the valve bodies 51 and 71. The first parts 56 and 76 are bonded to the second parts 57, 77, and 157 while being inserted into the second parts 57, 77, and 157. The first parts 56 and 76 are inserted from the front parts thereof and go beyond the movement passages 53 and 73. Therefore, even if stress is applied to the first parts 56 and 76, stress applied to the bonding interfaces between the first parts 56 and 76 and the second parts 57, 77, and 157 is reduced, and thus the structure is hard to break. Therefore, for example, a component obtained by making a hole along the center axis of a metal rod-shaped member, or a component obtained by processing a metal tubular member can be used for the first parts 56 and 76. It is thus possible to provide the shutoff valves 50 and 70 with a structure that can easily be manufactured at a low cost.

### (4-2)

Spaces to be closed by the valve bodies 51 and 71 when the valve bodies 51 and 71 are located at the first positions P1, in other words, spaces where the valve seats 59 and 79 are disposed are present inside the first parts 56 and 76. Therefore, the movement passages 53 and 73 of the valve bodies 51 and 71 in the first parts 56 and 76 and the spaces closed by the valve bodies 51 and 71 can be created in the first parts 56 and 76. As a result, the center axes of the movement passages 53 and 73 can easily match the center axes of the flow paths 52 and 72, in other words, the center axes of the movement passages 53 and 73 can easily match the center axes of the valve seats 59 and 79, making it easy to manufacture a structure that can be closed sufficiently by the valve bodies 51 and 71.

### (4-3)

The cross section perpendicular to the longitudinal direction of the first parts 56 and 76 has a polygonal shape, an oval shape, or a shape obtained by cutting an oval or circular shape with a straight line. The first parts 56 and 76 having such shapes can be fixed so as not to rotate around the longitudinal axis of the first parts 56 and 76 when the refrigerant pipes 12 and 13, which are the first refrigerant pipes, are connected to the first connection portions 56a and 76a. This makes the bonding portions (bonding surfaces BS1) less likely to break.

### (4-4)

The shutoff valves 50 and 70 have the cut surfaces 53P and 73P on the inner surfaces of the movement passages 53 and 73. The cut surfaces 53P and 73P are generated by continuous cutting from portions of the movement passages 53 and 73 inside the second parts 57, 77, and 157 to portions of the movement passages 53 and 73 inside the first parts 56 and 76. As a result, a step, which would be caused by the combination of the first parts 56 and 76 and the second parts 57, 77, and 157, is not generated on the inner surfaces of the movement passages 53 and 73. It is therefore possible to prevent the refrigerant leakage to the outside and insufficient closing of the shutoff valves, which would be caused when such a step is generated at the boundaries between the first parts 56 and 76 and the second parts 57, 77, and 157 inside the movement passages 53 and 73.

The cut surfaces 53P and 73P may be, for example, flush cut surfaces formed by continuous cutting with a drill through the boundaries between the first parts 56 and 76 and the second parts 57, 77, and 157. Alternatively, the cut surfaces 53P and 73P may have convexoconcave such as threads and grooves formed when a thread is continuously cut through the boundaries between the first parts 56 and 76 and the second parts 57, 77, and 157.

### (4-5)

The shutoff valves 50 and 70 have the valve seats 59 and 79 in the first parts 56 and 76. Therefore, for example, the movement passages 53 and 73 of the valve bodies 51 and 71, and the valve seats 59 and 79 can be processed at the same time. As a result, the movement passages 53 and 73 and the valve seats 59 and 79 can easily be made to have high dimensional accuracy, and it is easy to manufacture the shutoff valves 50 and 70 in which the valve bodies 51 and 71 and the valve seats 59 and 79 can be in close contact with each other without a gap while the valve bodies 51 and 71 are located at the first positions P1 and the valve bodies 51 and 71 are seated on the valve seats 59 and 79.

### (4-6)

In the shutoff valves 50 and 70, the second parts 57 and 77 include the support portions 57b and 77b, and the valve body accommodating portions 57a and 77a and the support portions 57b and 77b are integrated as one component. This makes it easy to increase the strength of the portion ranging from the valve body accommodating portions 57a and 77a to the support portions 57b and 77b.

For example, in a case where the valve body accommodating portions 57a and 77a and the support portions 57b and 77b are formed from a single cylindrical stainless steel pipe, a ready-made stainless steel pipe can be used for that purpose, making it easy to reduce the material cost. In the case where the support portions 57b and 77b extend in a ring shape from the bases of the cylindrical second parts 57 and 77 as in the above embodiment, the support portions 57b and 77b have a great strength as compared with a case where the bases of the cylindrical second parts 57 and 77 are used as they are as the support portions.

### (4-7)

Iron is contained in the material constituting the second parts 57, 77, and 157 including the valve body accommodating portions 57a and 77a, while copper is contained in the material constituting the first parts 56 and 76 including the first connection portions 56a and 76a. This makes it easy to increase the strength of the second parts 57, 77, and 157 more than the strength of the first parts 56 and 76 and to process the first connection portions 56a and 76a. As a result, it is possible to provide, at a low cost, shutoff valves 50 and 70 in which the refrigerant is less likely to leak from the valve body accommodating portions 57a and 77a and from the first connection portions 56a and 76a. The strengths of these materials are compared by a tensile test conforming to the JIS Standard Z2241 (a No. 11 test piece is used for the cylindrical shape).

### (4-8)

With the method of manufacturing the shutoff valves 50 and 70 described with reference to FIG. 10, the first parts 56 and 76 contain parts of the movement passages 53 and 73 of the valve bodies 51 and 71, and the first parts 56 and 76 can be bonded to the second parts 57, 77, and 157 while being inserted into the second parts 57, 77, and 157. Therefore, for example, a component obtained by making a hole along the center axis of a metal rod-shaped member, or a component obtained by processing a metal tubular member can be used for the first parts 56 and 76. As a result, the first parts 56 and 76 can be made from inexpensive members, and the shutoff valves 50 and 70 with a reduced risk of refrigerant leakage can be manufactured at a low cost.

In the embodiment described above, the first parts 56 and 76 are inserted into the second parts 57, 77, and 157, but the second parts 57, 77, and 157 are sometimes inserted into the first parts 56 and 76.

While the embodiments of the present disclosure have been described above, it will be understood that various changes in forms and details can be made without departing from the gist and scope of the present disclosure set forth in the claims.

### REFERENCE SIGNS LIST

10: air conditioner
12, 13: refrigerant pipe (exemplary first refrigerant pipe)
26, 27: refrigerant pipe (exemplary second refrigerant pipe)
20: heat source unit
30: utilization unit
50, 70: shutoff valve
51, 71: valve body
52, 72: flow path
53, 73: movement passage
53p, 73p: cut surface
56, 76: first part
56a, 76a: first connection portion
57a, 77a: valve body accommodating portion
57b, 77b: support portion
57d, 77d: fitting portion
57, 77, 157: second part
59, 79: valve seat

### CITATION LIST

### PATENT LITERATURE

Patent Literature 1: JP 2013-242038 A

## Claims

1. A shutoff valve (50, 70) comprising a flow path (52, 72) inside, the flow path allowing refrigerant to flow between a first refrigerant pipe (12, 13) extending to a utilization unit (30) and a second refrigerant pipe (26, 27) of a heat source unit (20) in a state where the shutoff valve (50, 70) is connected between the first refrigerant pipe and the second refrigerant pipe, the shutoff valve (50, 70) being configured to switch opening and closing of the flow path, the shutoff valve (50, 70) comprising:
a valve body (51, 71) configured to move through a movement passage (53, 73) between a first position for closing the flow path and a second position for opening the flow path;
a first part (56, 76) including a first connection portion (56a, 76a) connected to the first refrigerant pipe; and
a second part (57, 77, 157) including a valve body accommodating portion (57a, 77a) that accommodates the valve body located at the second position,
wherein the first part and the second part are separate parts bonded to each other, and the first part contains a part of the movement passage.

2. The shutoff valve (50, 70) according to claim 1,
wherein the first part includes a part of the flow path inside, and
a space to be closed by the valve body when the valve body is located at the first position is present inside the first part.

3. The shutoff valve (50, 70) according to claim 1 or 2,
wherein the first part has a cross section having a polygonal shape, an oval shape, or a shape obtained by cutting an oval or circular shape with a straight line, the cross section being perpendicular to a longitudinal direction of the first part.

4. The shutoff valve (50, 70) according to any one of claims 1 to 3,
wherein the first part and the second part have a cut surface (53P, 73P) on an inner surface of the movement passage, the cut surface being generated by continuous cutting from a portion of the movement passage inside the second part to a portion of the movement passage inside the first part.

5. The shutoff valve according to any one of claims 1 to 4,
wherein the first part includes a valve seat (59, 79) on which the valve body is seated when the valve body is at the first position.

6. The shutoff valve (50, 70) according to any one of claims 1 to 5,
wherein the second part (57, 77) includes a support portion (57b, 77b) to be fixed to the heat source unit.

7. The shutoff valve (50, 70) according to any one of claims 1 to 6,
wherein the valve body accommodating portion includes a material containing iron, and the first connection portion includes a material containing copper.

8. A method of manufacturing a shutoff valve (50, 70) comprising a flow path (52, 72) inside, the flow path allows refrigerant to flow between a first refrigerant pipe (12, 13) extending to a utilization unit (30) and a second refrigerant pipe (26, 27) of a heat source unit (20) in a state where the shutoff valve (50, 70) is connected between the first refrigerant pipe and the second refrigerant pipe, and a valve body (51, 71) configured to move through a movement passage between a first position for closing the flow path and a second position for opening the flow path, the method comprising:
inserting a first part (56, 76) into a second part (57, 77, 157) or inserting the second part into the first part, the first part including a first connection portion (56a, 76a) connected to the first refrigerant pipe, the second part including a valve body accommodating portion (57a, 77a) that accommodates the valve body located at the second position;
bonding the first part and the second part; and
forming an inner surface of the movement passage by continuous cutting from the second part to the first part.
